# EUROPEAN PATENT SPECIFICATION

(11) **EP 1 576 884 B1**
(45) Date of publication and mention of the grant of the patent: **26.11.2014**
(21) Application number: 05425132.7
(22) Date of filing: 09.03.2005
(51) Int. Cl.: A21D 17/00, A21D 8/02, A23L 1/164, A23L 1/00, A23G 3/00, A23G 3/02

(54) **Process for producing meringue by extrusion and products obtained by the process**
Verfahren zur Herstellung von Schaumgebäck durch Extrusion und danach hergestellte Produkte
Procédé de fabrication de meringue par extrusion et produits obtenus

(30) Priority: 17.03.2004 IT RM20040136
(43) Date of publication of application: 21.09.2005
(73) Proprietor: D'Orsogna Dolciaria s.r.l., 66038 San Vito Chietino (CH) (IT)
(72) Inventor: D'Orsogna, Mario D'Orsogna Dolcaria Soc. U. a r.l., 66030 Treglio (CH) (IT)
(74) Representative: Banchetti, Marina

(56) References cited:
- EP-A- 0 334 617
- EP-A- 0 623 288
- EP-A2- 0 619 948
- WO-A-2004/005227
- WO-A1-00/49878
- WO-A1-96/29882
- FR-A- 1 388 236
- FR-A- 2 773 954
- FR-A1- 2 276 002
- FR-A1- 2 773 952
- FR-A1- 2 783 403
- FR-A1- 2 803 489
- FR-A5- 2 046 608
- US-A- 3 539 356
- US-A- 4 344 975
- US-A- 4 344 975
- US-A- 4 588 596
- US-A- 5 079 026
- US-A- 5 514 404
- US-A- 5 709 902
- US-A- 6 074 489
- US-A1- 2004 234 660
- US-A1- 2005 013 923

## Description

The present invention concerns a process for the production of a baking product equivalent to traditional meringue by extrusion and related products such as, in particular, small-sized meringues and meringue granules. More specifically, the invention concerns a production process for the preparation of a baking product equivalent to traditional meringue that avoids the whipping stage of the mixture and allows recycling the fine product, mostly obtained as a left-over of the final granulating operations, by reintroducing it as an ingredient of the mixing phase.

As is known, both in home-made and in industrially manufactured procedures, the meringue is a baking product essentially made of egg-whites and sugar whipped to a light but solid texture, that is first modeled into the desired shape, for example, by placing it into specific moulds or by extruding it into round shapes using a pastry bag, and is then oven baked until it solidifies completely, taking on a whitish color with varying golden brown hues or even other hues as a result of the addition of other ingredients.

Besides being used as a finished confectionary product, the meringue is an important semi-finished product of the confectionary industry and is used as a component or decoration for more complex confectionary products, or for ice-creams, ice-cream cakes and the like. Granulated or powdered to more or less fine dimensions after baking, it is a widely used component for coatings and decorations such as in ice-cream products.

When manufactured industrially, a traditional meringue may be made of sugar (using partly granulated sugar and partly superfine sugar) whipped with fresh egg-whites or, alternatively, with dry or powdered egg-white and an equivalent amount of water as that found in fresh egg-white (the optimal ratio between dry egg-white material and water being about 1/10, in natural egg-whites), starch as a thickener, and optionally the addition of small quantities of flavoring, such as vanilla. As an example, the composition of an industrially produced traditional meringue is as follows:

| Typical ingredients | Indicative % |
|---|---|
| water | 12.62 |
| egg-white | 1.26 |
| superfine sugar | 63.12 |
| granulated sugar | 16.41 |
| wheat starch | 6.56 |
| vanilla flavoring | 0.006 |

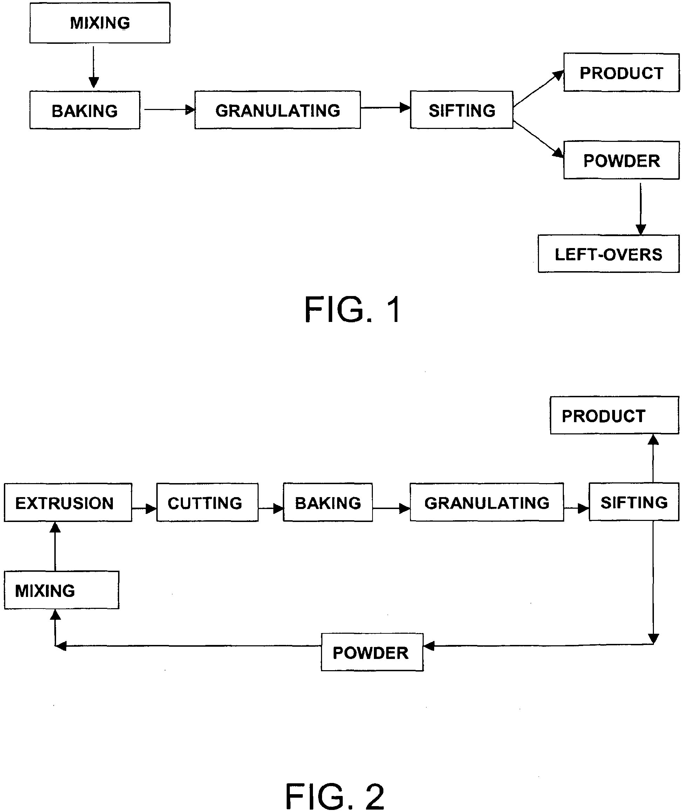

The aforesaid ingredients are normally mixed in batches by loading a planetary mixer equipped with vertical stirrers which, by a combined movement of rotating about their own axis and also rotating about a common axis in the mixing bowl, whip the mixture to a light stiff texture by incorporating therein a large amount of air. This mix is then introduced into a production line that goes to mould the mixture into the desired shapes, which are then taken by conveyer belt to an oven with the right temperature and conveyor speed for the optimal baking of this kind of product. For some uses, the baked meringue units coming out of the oven can be used as they are, or they may undergo granulation in special machines with mill-like rotating elements thereby resulting in meringue granules of the size required for their later use as a semi-finished product. A block diagram of a process of this kind is illustrated, by way of example, in the attached Figure 1, which will be dealt with in more detail further on.

It is evident that this final stage of the procedure, as well as other intermediate stages of the production process, yields powders of crushed meringue granules, that are easily produced also because of the extremely fragile nature of meringue. These powders, which are too fine to be incorporated in the desired product, must be discarded and cannot be reintroduced at any stage of the production process, such that they are often sold as animal feed. The impossibility of reusing such left-overs in the described production process is due to the fact that the concerned powdery ingredient cannot be added to the whipped egg-white mixture processed in the food mixer because it would irreparably compromise the texture of the mixture, completely spoiling the characteristics of the product right from the mixing phase.

Albeit with different variations essentially concerning the choice and dosage of the ingredients, or the mechanical phases for shaping the mixture before baking, the known processes for the industrial manufacturing of meringue and of the various forms of granules obtained from it still involve the production of a whipped mixture as well as a considerable amount of leftovers due to the impossibility of reutilizing the powders in the initial mixing process.

With reference to the production of meringue or meringue-like products, the US patent publication US 2004/0234660 discloses a process for compression molding of a dried aerated confection, which may be a dried meringue. The composition of the meringue product corresponds to the traditional composition, with egg-white and sugar as the main ingredients, which are beaten to produce a frothy product. The process concerns the molding of such confection pieces into complex shapes.

The French patent publication FR 2773952 discloses a process for producing a conventional meringue which is able to maintain its crunchy consistence for a long time, thanks to a coating of a waterproof food material, such as chocolate.

Further, the French patent publication FR 2276002 concerns a process for producing food products (that may also be meringues) which contain fatty ingredients added. Also in this case, the main ingredients of the meringue are sugar and egg-whites (or, more generally, foaming hydrolyzed proteins).

None of the above prior art documents describes a process for making meringue which deviates from the conventional method of beating egg-whites together with sugar.

The European patent publication EP0619948 concerns the production of low-density no fat ready-to-eat baked products such as breakfast cereal products, obtained by whipping egg-white and sugar with flavours to form a foam, then slowly adding cake flour, corn starch and ammonium bicarbonate, extruding the homogeneous mixture formed and baking. The proportions of sugar, egg-white and flour given in the document, as well as the absence of oil, are such that the resulting product cannot be considered to be a meringue-like product.

On the basis of this prior art, an object of the present invention is, thus, to provide a meringue production method, and particularly a method for producing meringue granules, which allows to avoid the aforesaid drawbacks and offers a final product that is equivalent for quality and characteristics to the traditional one described above, but with a considerable reduction in leftovers and thus a consequent economic saving.

To this end, according to the present invention there is proposed to carry out the initial mixing process without envisaging whipping the egg-whites with sugar but introducing appropriate components among the ingredients such that the chosen technology still achieves the light and airy texture typical of meringues even without whipping. In this way, there is the advantage of being able to recycle the powders obtained in the later stages of the production process in the initial mixing process, without needing to discard them as a by-product.

The mixture proposed according to the present invention is designed and calibrated to be processed practically in a dry state, by adding a chemical yeast such as sodium bicarbonate or ammonium bicarbonate to the fundamental ingredients of traditional meringues - that is, sugar and egg-whites (or rather powdered egg-whites and water). Following thermal decomposition in the baking process, the chemical yeast triggers the production of carbon dioxide and possibly ammonia, which cause an airing of the mixture comparable with what occurs with the whipping process. This solution is combined with the adoption of an extrusion technology for the production of meringue units to be conveyed to the oven for baking, carried out in a similar manner to the making of noodles. The process involves inputting the homogeneous (but non-whipped) mixture into a screw-type extrusor from whose draw-plate small cylindrical elements of consistent mixture emerge. These cylindrical elements ial are cut into small segments and conveyed to the oven for baking.

In order to give the concerned mixture the necessary texture for it to be extruded through the draw-plate, the product according to the present invention also contains, in comparison with a traditional meringue mix, an ingredient like wheat flour. In order for it to be homogeneously mixed despite the largely powdery consistency, the said product also contains a certain amount of oil, and preferably sunflower seed oil.

The procedure according to the present invention thus enables the production of meringue by extrusion, whereby the initial mixture does not require whipping and allows incorporating without any problems large fractions of powdered product recycled from the later stages of the production process.

In the field of industrial production of meringue, the Italian patent No. 1246340 discloses a mechanical device for the production of pre-cut meringue that is referred to as an extrusor or extrusion mould. This is a specially designed device for obtaining - in the final meringue shape before baking - preestablished fracture lines enabling the realisation of portions of the required size by mere manual cutting, thus avoiding the inconveniences connected to the fragility of the finished product.

Although the shaping device described in the aforesaid document is referred to as an "extrusor", the meringue mixture that it is designed for is a traditional one, which the document describes as essentially made up of egg-whites whipped with sugar.

Thus, the present invention specifically provides a process for the production of a bakery product equivalent for quality and characteristisc to traditional meringue by extrusion, and optionally related granules, comprising, in sequence, the following steps:
a) mixing a composition of ingredients including sugar, powdered egg-whites and water (or fresh egg-whites), starch, flour, chemical yeast and oil, part of said ingredients being optionally composed of the recycling of a fine fraction of product separated during the production process;
b) extruding the mixture resulting from the previous operation via a screw-type extrusion device yielding through the draw-plate thereof homogeneous cylindrical or prismatic elements of product;
c) cutting the said elements into segments;
d) baking the said cut elements, with leavening of the product;
e) optionally granulating the product obtained in the baking step d);
f) subsequently separating the finished product, in the desired size, from the fine powders by sifting;
wherein any fine powders of the product separated during the production process are recycled by reintroducing them in the mixing step a).

Preferably, the said mixture of ingredients of step a) includes powdered egg-whites and water, while the sugar used is superfine sugar, the starch and flour are from wheat, the chemical yeast is ammonium bicarbonate and the oil is sunflower seed oil. The said ingredients are preferably included in the following proportions in the mixture, as a percentage by weight:

| | |
|---|---|
| superfine sugar | 42 - 64 % |
| powdered egg-whites | 1 - 3 % |
| water | 10 - 30 % |
| wheat starch | 2.5 - 8.0 % |
| wheat flour | 5 - 16 % |
| ammonium bicarbonate | 0.15 - 0.7 % |
| sunflower seed oil | 3 - 10 % |

Part of these ingredients may also derive from the recycling of the said fine powders. In practice, when the mixture is made in batches, the first list of ingredients of the working day will be in the proportions reported in the table above, while the ingredient lists for later batches will be recalculated bearing in mind that the later mixtures will include an amount of recycled powder, largely containing the same ingredients (excluding water). The amount of ingredients deriving from the recycled fine powders may make up from 40% to 65% percent weight of the entire mixture of step a).

The mixing step a) may be carried out, according to a specific embodiment, in a zed-mixer (or of the Werner and Pfleiderer type), having a container with square or rectangular cross-section and two rotating horizontal Z-shaped stirrers. This device is normally equipped with a container whose bottom is delimited by two semi-cylindrical surfaces with parallel axes, connected along a generatrix; each surface containing one of the two Z-shaped rotating stirrers. By their motion, the stirrers first force the mixture up along the walls of the container and then down centrally, where the motion of the stirrers assures a vigorous remixing of the composition. It is evident that a device like this, unlike the traditional planetary mixer, is suitable for processing non-fluid, but partially powdery, mixtures such as the one considered here, and allows achieving a homogeneous mix by making the oil reach every part of the mixture.

Depending on the nature of the ingredients used, with a mixing device as the one described above, it is normally advisable to start with a part of the ingredients first, run the mixer for a certain period of time and then add the remaining ingredients and complete the operation.

As an altemative to the described mixer, it is also possible to use other equipment as long as it can withstand high pressure and is suitable for mixing almost dry mixtures such as the one considered here. If a continuous operation is desired instead of a batch operation, then for the mixing phase it is possible to use a suitable turbo-mixer, which can discharge the mixed product directly onto the production line.

Preferably, the said mixture extrusion step b) is carried out at high pressure, using a draw-plate with round holes, preferably bronzed in view of the better capability of this material to withstand the high extrusion pressures involved. Each of the draw-plate holes has a larger input diameter, where the mixture to be extruded is fed in, and a smaller output diameter, with each channel including a narrowing (for example, a conical narrowing if the holes are round) at a certain point of its length and, subsequently, a tract that is of a constant section, equal to the outlet section. This tract, called a pre-chamber, is important in order to give compactness to the extruded product, and its length is one of the parameters that can be regulated to optimise the quality of the product.

The extrusion step is followed by a cutting step c), carried out by means of a rotating blade cutter placed immediately at the exit of the said draw-plate. Depending on the speed of the blade, more or less lengthy cylindrical segments of compact product are obtained, but an axial length equal to or slightly less than the diameter of the cylinder is generally preferable. Naturally, in the same way as with screw-type extrusors used in noodle production, the draw-plate holes may be of any shape, such as, e.g., square-shape. However, round holes have fewer practical problems and are the preferred shape when the required final product is powdered granules.

In the procedure according to the present invention, the baking step d) is carried out by passing the product in a tunnel oven involving two baking stages. The first stage is carried out with a burner at 230-250°C while the second stage is carried out with a burner at 120-140°C - the total baking time being 6-8 minutes. This temperature scheme is programmed so that the product undergoes a great initial heating, which immediately triggers the leavening process, followed by a more moderate heating, after the product has risen, in order to complete the baking process.

On exiting the baking process, if the desired final product is not the thus obtained meringue units, but the relative granules, then the already mentioned granulation operations are carried out in one or more granulating machines, each one consisting of two parallel toothed rollers which, by rotating in opposite directions to one another, crush up the segments of product passing through them. The product exiting these granulation operations is then separated by sifting into three fractions - an intermediate granular fraction making up the final product, a coarser granular fraction that is returned to the granulation operation, and a finer fraction that is recycled by reintroducing it into the aforesaid mixing step a).

If two granulating machines are used in sequence, for example, then the coarse fraction exiting the first machine is used to feed a second similar apparatus, while the intermediate fraction from the first machine is the desired product and the finer fraction is recycled to be used in the aforesaid mixing step a). The second granulating machine will only yield fractions of finer product to be recycled to step a) and the fraction of product of the desired size, while the coarser fraction product is fed back into the same machine.

According to a further aspect, the present invention concerns an extruded bakery product according to claim 11.

The specific characteristics of the present invention, as well as its advantages and the corresponding operating modalities will be clearer with reference to a detailed description thereof, that is presented merely by way of example and is also illustrated in the attached drawings, wherein:
Figure 1 shows a block diagram of a meringue granule production procedure according to the prior art; and
Figure 2 shows a block diagram of a meringue granule production procedure by extrusion according to the present invention.

With reference to figure 1, already recalled earlier, the mixture is whipped and sifted according to the traditional procedure, and baking only serves to preserve an already aired texture. It is evident from the diagram that, by not enabling any addition of the powders obtained as fine fractions from the granulation and sifting operations of the final product, these powders necessarily represent non-reusable waste products, thus penalizing the economic yield of the entire process.

On the other hand, by operating according to the procedure of the present invention, as shown schematically in figure 2, the mixture - composed of suitable ingredients - is not whipped but undergoes extrusion. After the final granulation operation (where the relative block in the diagram may represent even two or more stages in a cascade sequence), the powders produced are reintroduced into the starting product in the initial mixing phase. Such operation is not possible with the traditional procedure. In this way, a closed-circuit process is realized whereby the only outputted product is the desired final one.

### EXAMPLE 1

Preparation of chocolate-flavored "truffle" meringue granules

According to a specific form of realization of the process of the present invention, a chocolate meringue is produced starting from the following ingredients:

| **Phase 1** | Indicative % |
|---|---|
| recycled powders | 40.7 |
| whipping (powdered) egg-whites | 1.0 |
| wheat starch | 2.8 |
| wheat flour | 7.9 |
| ammonium bicarbonate | 0.3 |
| sunflower seed oil | 2.7 |
| cocoa 10/12 | 1.8 |
| **Phase 2** | |
| powdered sugar | 33.8 |
| water | 9.0 |

The ingredients of phase 1 are weighed and loaded into a zed-mixer (Sodolve, Mod. HSM/S with a capacity of 110 liters), and then mixed for 2 minutes. Thereafter, the ingredients of phase 2 are added and the mixture is mixed for another 2 minutes.

The product is then loaded into the cochlea of a screw-type extrusor with a bronzed draw-plate containing round holes for high pressure operation. The diameter of the input hole is 11 mm and that of the exit hole is 4.5 mm, while the pre-chamber has a length of 20 mm. An optimal choice of these parameters consists of limiting the input hole to between 9 and 13 mm in diameter, and the output hole to between 2.2 and 5 mm, while the pre-chamber length should be between 17 and 23 mm.

On exiting the extrusor, the product is cut to the required size established by the speed of the cutter blades and is then carried by a conveyor belt to an oven of the Simer type with two baking stages, the first using a burner at 240°C and the second using a burner at 130°C, with a total baking time of 7 minutes.

On exiting the oven the product is granulated and sifted in two consecutive stages, in order to obtain:
■ powders (to be reused in the next mixing process);
■ coarser granules, to be fed back into the granulating machine;
■ the finished product.

### EXAMPLE 2

Preparation of white hazelnut flavored meringue granules

According to another embodiment of the process of the present invention, a white hazel nut flavored meringue is produced starting from the following ingredients:

| **Phase 1** | Indicative % |
|---|---|
| recycled powders | 48.3 |
| superfine sugar | 30.2 |
| whipping (powdered) egg-whites | 1.0 |
| water | 8.2 |
| wheat starch | 3.0 |
| ventilated wheat flour | 6.0 |
| ammonium bicarbonate | 0.1 |
| hazel nut flour | 1.2 |
| stabilizer | 0.04 |
| vanilline | 0.06 |
| **Phase 2** | |
| sunflower seed oil | 1.9 |

The preparation is carried out using the same equipment as in example 1, and proceeding in the same manner. Here, too, only the desired product is obtained from the process because the powders are recycled by adding them as ingredients to the next batch to be mixed.

As is evident from the foregoing, with respect to the traditional procedure, the main advantage of the process according to the present invention lies in the possibility of recycling the powders obtained during the granulation and sifting operations, by reusing them as ingredients in the next batch to be mixed. This achieves a better production yield and a corresponding reduction in by-products of the entire process.

Moreover, the meringue granules obtained with the proposed procedure are crunchier and more compact compared to the kind obtained with the traditional method - and this can be an advantage when the product is to be employed as a semi-finished component, in particular for ice-cream products.

The present invention has been disclosed with particular reference to some specific embodiments thereof, but it should be understood that modifications and changes may be made by the persons skilled in the art without departing from the scope of the invention as defined in the appended claims.

## Claims

1. A process for the production of a bakery product equivalent to traditional meringue by extrusion, and optionally related granules, comprising in sequence, the following steps:
a) mixing a composition of ingredients including sugar, powdered egg-whites and water (or fresh egg-whites), starch, flour, chemical yeast and oil, part of said ingredients being replaced by the recycling of any fine powders of product separated during the production process;
b) extruding the mixture resulting from the previous operation via a screw-type extrusion device yielding through the draw-plate thereof homogeneous cylindrical or prismatic elements of product;
c) cutting the said elements into segments;
d) baking the said cut elements, with leavening of the product;
e) optionally granulating the product obtained in the baking step d);
f) subsequently separating the finished product, in the desired size, from the fine powders by sifting;
wherein any fine powders of the product separated during the production process are recycled by reintroducing them in the mixing step a).

2. A process according to claim 1, wherein said mixture of ingredients of step a) includes powdered egg-whites and water, while the sugar used is superfine sugar, the starch and flour are from wheat, the chemical yeast is ammonium bicarbonate and the oil is sunflower seed oil.

3. A process according to claim 2, wherein said ingredients are present in the mixture of step a) in the following percentage weights:
| | |
|---|---|
| superfine sugar | 42 - 64 % |
| powdered egg-whites | 1 - 3 % |
| water | 10 - 30 % |
| wheat starch | 2.5 - 8.0 % |
| wheat flour | 5 - 16 % |
| ammonium bicarbonate | 0.15 - 0.7 % |
| sunflower seed oil | 3 - 10 % |
with the possibility for a portion of said ingredients to derive from the recycling of the said fine powders.

4. A process according to claim 3, wherein said portion of ingredients consisting of recycled fine powders makes up from 40% to 65% weight of the said mixture of step a).

5. A process according to any one of claims 1-4, wherein said mixing step a) is carried out in a zed-type mixer (or of the Werner and Pfleiderer type) equipped with a container of square or rectangular cross-section and two rotating horizontal Z-shaped stirrers.

6. A process according to any one of claims 1-5, wherein said extrusion step b) of the mixture is carried out a high pressure through a draw-plate with round holes.

7. A process according to any one of claims 1-6, wherein said cutting step c) is carried out by using a rotating blade cutter placed immediately at the exit of said draw-plate.

8. A process according to any one of claims 1-7, wherein said baking step d) is carried out by conveying the product through a tunnel oven involving two baking stages, the first stage being carried out with a burner at 230-250°C and the second stage being carried out with a burner at 120-140 °C, the total baking time being 6-8 minutes.

9. A process according to any one of claims 1-8, wherein said granulating operations are carried out in one or more granulating machines equipped with two parallel toothed rollers which, by rotating in the opposite direction to one another, crush the product segments passing through them.

10. A process according to any one of claims 1-9, wherein the product outputted from the said granulating operations is separated by sifting into three fractions: an intermediate granular fraction making up the final product, a coarser granular fraction that is returned to the granulation operation, and a finer fraction that is recycled by reintroducing it into the aforesaid mixing step a).

11. An extruded bakery product equivalent to traditional meringue and related granules, produced starting from a composition of ingredients including sugar, powdered egg-whites and water (or fresh egg-whites), starch, flour, chemical yeast and oil, and obtainable according to the process as described in claims 1-10.

## Patentansprüche

1. Verfahren zur Herstellung eines Bäckereiproduktes entsprechend traditionellem Schaumgebäck durch Extrusion und optional zugehörige Körner, umfassend die folgenden Schritte der Reihe nach:
a) Mischen einer Zusammensetzung von Inhaltsstoffen enthaltend Zucker, puderige Eiweiße und Wasser (oder frische Eiweiße), Stärke, Mehl, chemische Hefe und Öl, wobei ein Teil dieser Inhaltsstoffe ersetzt wird durch die Wiederverwendung des feinen Produktpulvers, das während des Herstellungsprozesses abgetrennt wird;
b) Extrudieren der aus dem vorangegangenen Vorgang resultierenden Mischung durch ein Extrusionsgerät des Schraubentyps, das durch das Zieheisen davon homogene zylindrische oder prismatische Produktelemente hervorbringt;
c) Schneiden der Elemente in Segmente;
d) Schneiden der geschnittenen Elemente mit einer Gährung des Produkts;
e) Optional granulieren des in dem Backschritt d) erhaltenen Produktes;
f) anschließend Trennen des fertiggestellten Produktes in der gewünschten Größe von dem feinen Pulver durch Sieben;
wobei ein feines Pulver des Produktes, das während des Produktionsprozesses abgetrennt wird, durch Wiedereinführen in dem Mischschritt a) wiederverwendet wird.

2. Verfahren gemäß Anspruch 1, wobei die Mischung von Inhaltsstoffen von Schritt a) puderige Eiweiße und Wasser enthält, während der verwendete Zucker superfeiner Zucker ist, die Stärke und das Mehl vom Weizen stammen, die chemische Hefe Ammoniumbicarbonat ist und das Öl Sonnenblumenkernöl ist.

3. Verfahren gemäß Anspruch 2, wobei die Inhaltsstoffe in der Mischung von Schritt a) die folgenden prozentualen Gewichte haben:
| | |
|---|---|
| Superfeiner Zucker | 42 - 64 % |
| Puderige Eiweiße | 1 - 3 % |
| Wasser | 10 - 30 % |
| Weizenstärke | 2,5 - 8,0 % |
| Weizenmehl | 5 - 16 % |
| Ammoniumbicarbonat | 0,15 - 0,7 % |
| Sonnenblumenkernöl | 3 - 10 % |
mit der Möglichkeit, dass ein Teil der Inhaltsstoffe aus der Wiederverwendung des feinen Pulvers abgeleitet wird.

4. Verfahren gemäß Anspruch 3, wobei der Anteil von Inhaltsstoffen bestehend aus wiederverwendeten feinen Pulvern 40% bis 50% des Gewichts der Mischung von Schritt a) ausmacht.

5. Verfahren gemäß einem der Ansprüche 1-4, wobei der Mischschritt a) in einem Z-Typ-Mischer (oder in dem Wernerund Pfleiderer-Typ) durchgeführt wird, der mit einem Behälter von eckigem oder rechteckigem Querschnitt und zwei rotierenden, horizontalen Z-geformten Rührern ausgestattet ist.

6. Verfahren gemäß einem der Ansprüche 1-5, wobei der Extrusionsschritt b) der Mischung ausgeführt wird bei hohem Druck durch ein Zieheisen mit runden Löchern.

7. Verfahren gemäß einem der Ansprüche 1-6, wobei der Schneidschritt c) ausgeführt wird unter Verwendung eines rotierenden Schneidmessers, das unmittelbar am Ausgang des Zieheisens angeordnet ist.

8. Verfahren gemäß einem der Ansprüche 1-7, wobei der Backschritt d) ausgeführt wird durch Fördern des Produktes durch einen Tunnelofen unter Einbeziehung von zwei Backstufen, wobei die erste Stufe ausgeführt wird mit einem Brenner bei 230-250°C und die zweite Stufe ausgeführt wird mit einem Brenner bei 120-140°C, wobei die Gesamtbackzeit 6-8 Minuten ist.

9. Verfahren gemäß einem der Ansprüche 1-8, wobei die Granulierungsvorgänge in einem oder mehreren Granulierungsmaschinen ausgeführt werden, die mit zwei parallelen Zahnwalzen ausgestattet sind, die durch eine Drehung in entgegengesetzten Richtungen die durchgehenden Produktsegmente zermahlen.

10. Verfahren gemäß einem der Ansprüche 1-9, wobei das von den Granulierungsvorgängen ausgegebene Produkt durch Sieben in drei Teile getrennt wird: Einen mittleren Granulatanteil, der das endgültige Produkt ausmacht, einen grobkörnigeren Granulatanteil, der zu dem Granulierungsvorgang zurückgeführt wird, und einem feineren Anteil, der durch Wiedereinführen in den vorstehend genannten Mischschritt a) wiederverwendet wird.

11. Extrudiertes Bäckereiprodukt entsprechend traditionellem Schaumgebäck und zugehörigen Körnern, das hergestellt wird ausgehend von einer Zusammensetzung von Inhaltsstoffen, die Zucker, puderige Eiweiße und Wasser (oder frische Eiweiße), Stärke, Mehl, chemische Hefe und Öl enthalten, und das man erhält durch das Verfahren, wie es in den Ansprüche 1-10 beschrieben ist.

## Revendications

1. Procédé de fabrication par extrusion d'un produit de boulangerie comparable à de la meringue traditionnelle, et éventuellement des granulés associés, comprenant, dans l'ordre, les étapes suivantes :
a) mélanger une composition d'ingrédients comprenant du sucre, du blanc d'oeuf en poudre et de l'eau (ou blancs d'oeufs frais), de l'amidon, de lafarine, de la levure chimique et de l'huile, une partie des ingrédients étant remplacée par le produit de recyclage de poudres fines provenant du produit séparé au cours du processus de fabrication ;
b) extruder le mélange résultant de l'opération précédente à l'aide d'un dispositif d'extrusion de type à vis, délivrant à travers sa filière des éléments de produit de forme cylindrique ou prismatique homogènes ;
c) découper lesdits éléments en segments ;
d) cuire lesdits éléments découpés, en laissant lever le produit ;
e) éventuellement granuler le produit obtenu à l'issu de l'étape de cuisson d) ;
f) séparer ensuite au format désiré le produit fini des poudres fines par passage au tamis ;
dans lequel toutes les poudres fines provenant du produit séparé durant le processus de fabrication sont recyclées en étant réintroduites au cours de l'étape de mélange a).

2. Procédé selon la revendication 1, dans lequel ledit mélange d'ingrédients de l'étape a) comprend du blanc d'oeuf en poudre et de l'eau, le sucre utilisé étant un sucre superfin, l'amidon et la farine provenant du blé, la levure chimique étant du bicarbonate d'ammonium et l'huile étant une huile de tournesol.

3. Procédé selon la revendication 2, dans lequel lesdits ingrédients sont présents dans le mélange de l'étape a) selon les pourcentages pondéraux suivants :
| | |
|---|---|
| Sucre superfin | 42 - 64 % |
| Blanc d'oeuf en poudre | 1 - 3 % |
| Eau | 10 - 30 % |
| Amidon de blé | 2,5 - 8,0 % |
| Farine de blé | 5 - 16 % |
| Bicarbonate d'ammonium | 0,15 - 0,7 % |
| Huile de tournesol | 3 - 10 % |
avec la possibilité pour une partie desdits ingrédients d'être issue du recyclage desdites poudres fines.

4. Procédé selon la revendication 3, dans lequel ladite partie des ingrédients composée de poudres fines recyclées représente jusqu'à 40 % à 65 % en poids dudit mélange de l'étape a).

5. Procédé selon l'une des revendications 1 à 4, dans lequel ladite étape de mélange a) est mise en oeuvre dans un malaxeur de type Zed (ou encore de type Werner et Pfeiderer), équipé d'une cuve de section transversale carrée ou rectangulaire et de deux pales en Z à rotation horizontale.

6. Procédé selon l'une des revendications 1 à 5, dans lequel ladite étape d'extrusion b) du mélange est mise en oeuvre à pression élevée à travers une filière à trous ronds.

7. Procédé selon l'une des revendications 1 à 6, dans lequel ladite étape de découpage c) est mise en oeuvre à l'aide d'une lame de coupe en rotation disposée immédiatement à la sortie de ladite filière.

8. Procédé selon l'une des revendications 1 à 7, dans lequel ladite étape de cuisson d) est mise en oeuvre en transportant le produit à travers un four tunnel prévoyant deux étapes de cuisson, la première étape étant réalisée à l'aide d'un brûleur réglé entre 230 et 250 °C, et la seconde étape étant réalisée à l'aide d'un brûleur réglé entre 120 et 140 °C, le temps de cuisson total étant de 6 à 8 minutes.

9. Procédé selon l'une des revendications 1 à 8, dans lequel lesdites opérations de granulation sont réalisées dans une ou plusieurs machines à granuler équipées de deux cylindres dentés parallèles, qui, par leur rotation en sens inverse, broient les segments de produit qui passent entre eux.

10. Procédé selon l'une des revendications 1 à 9, dans lequel le produit délivré à l'issue desdites opérations de granulation est séparé par tamisage en trois fractions : une fraction de granulation intermédiaire qui compose le produit final, une fraction granulaire plus grossière qui est ramenée au stade de la granulation, et une fraction plus fine, qui est recyclée par réintroduction de celle-ci dans l'étape de mélange a) précitée.

11. Produit de boulangerie extrudé comparable à la meringue traditionnelle, et granulés associés, fabriqué(s) à partir d'une composition d'ingrédients comprenant sucre, blanc d'oeuf en poudre et eau (ou blancs d'oeufs frais), amidon, farine, levure chimique et huile, et pouvant être obtenu(s) à l'aide du procédé selon les revendications 1 à 10.
